# EUROPÄISCHE PATENTSCHRIFT

(11) **EP 4 497 608 B1**
(45) Veröffentlichungstag und Bekanntmachung des Hinweises auf die Patenterteilung: **14.01.2026**
(21) Anmeldenummer: 24187001.3
(22) Anmeldetag: 08.07.2024
(51) Int. Cl.: B60B 33/00

(54) **ROLLENBREMSE FÜR DOPPELTE KOFFERLENKROLLE**
ROLLER BRAKE FOR DOUBLE SUITCASE CASTER
FREIN À ROULEAUX POUR DOUBLE ROULETTE DE VALISE

(30) Priorität: 28.07.2023 DE 102023120149
(43) Veröffentlichungstag der Anmeldung: 29.01.2025
(73) Patentinhaber: RIMOWA GmbH, 50829 Köln (DE)
(72) Erfinder: SCHULTE, Peter, 51491 Overath (DE); VANNIER, Guillaume, 40237 Düsseldorf (DE); MAS, Laurent, 51469 Bergisch Gladbach (DE)
(74) Vertreter: Dr. Solf & Zapf Patent- und Rechtsanwalts PartG mbB

(56) Entgegenhaltungen:
- DE-U1- 202011 050 314
- ES-U- 1 047 165
- US-A- 2 878 899
- US-A- 2 987 141

## Beschreibung

Die Erfindung betrifft ein bremsbare Lenkrolle, aufweisend ein über Schwenkmittel in eine Laufrichtung schwenkbares Rollengehäuse und zwei an dem Rollengehäuse auf einer horizontalen Radachse drehbar gelagerte Laufräder, wobei die Schwenkmittel in entgegen der Laufrichtung gesehen vor der Radachse angeordnet sind, und aufweisend eine Bremsvorrichtung, die zwischen einer Bremsstellung, bei der die Bremsvorrichtung eine Bremskraft auf mindestens ein Laufrad ausübt, und einer Freilaufstellung, bei der die Bremsvorrichtung die Laufräder freigibt, verstellbar ausgebildet ist.

Lenkrollen haben sich als die präferierte Rollenart für Gepäckstücke wie Koffer im Markt durchgesetzt. Dabei kommen insbesondere lenkbare Doppelrollen häufig zum Einsatz. Neben möglichst geringen Kosten, Leichtläufigkeit und Langlebigkeit werden bei Kofferrollen auch besondere Anforderungen an die Stoßdämpfung und die Geräuschentwicklung gestellt. Zudem ist insbesondere bei hochpreisigen Koffern auch das Design der Rollen und insbesondere der Laufräder wichtig. Außerdem ist es vorteilhaft, wenn die sich abnutzenden Laufräder austauschbar sind, was die einwandfreie Funktionsfähigkeit des Gepäckstücks über einen langen Nutzungszeitraum nachhaltig sicherstellt und etwaigen negativen Effekten durch abgenutzte Laufräder (beispielsweise eine negative Geräuschentwicklung, eingeschränkte Laufeigenschaften oder schlechtere Haptik bei der Benutzung des Gepäckstücks) entgegenwirkt. Insbesondere wegen der mittlerweile erzielten sehr guten Leichtläufigkeit von qualitativ hochwertigen Kofferrollen ergibt sich die Problematik eines unerwünschten Wegrollens des Gepäckstücks, zum Beispiel auf schrägen Flächen beim Anstehen in Warteschlangen, die aufgrund des barrierefreien und behindertengerechten Ausbaus von Flughäfen und Bahnhöfen immer häufiger anzutreffen sind, oder in öffentlichen Verkehrsmitteln beim Anfahren oder Abbremsen von Bussen oder Zügen.

In Abhängigkeit des Reibungskoeffizienten der Rollen und des Bodenbelags kann es selbst bei am Markt befindlichen gebremsten und vollständig blockierbaren Kofferrollen je nach Gewicht der Beladung des Koffers und der Untergrundbeschaffenheit zu einem Wegrutschen des Koffers kommen, wenn die Bodenhaftung der Rollen nicht ausreichend ist. Andererseits kann es nachteilig sein, wenn die Bodenhaftung und Bremskraft so groß ist, dass die Koffer ab einer gewissen Bewegungskraft umkippen.

Eine bremsbare Lenkrolle ist beispielhaft in der DE 39 13 722 A1 beschrieben. Die Bremsvorrichtung ist für ein Rollengehäuse konstruiert, welches die beiden Laufräder gabelartig mit zwei Schenkeln seitlich umfasst. Die dort beschriebene Bremsvorrichtung für die Lenkrolle ist relativ aufwändig gestaltet, wobei hier die Rolle nicht nur durch eine Reibkraft gebremst, sondern zusätzlich auch die Drehbewegung blockiert werden kann. Die Bremskraft wird durch eine von oben auf die Laufrollen radial gerichtete Bremskraft erzeugt.

Eine weitere bremsbare Lenkrolle ist aus der ES 1 047 165 U bekannt. Die Bremsvorrichtung ist ebenfalls für ein Rollengehäuse konstruiert, welches die beiden Laufräder gabelartig mit zwei Schenkeln seitlich umfasst. Dabei weist die Bremsvorrichtung ein Bremspedal mit einer zwischen den Laufrädern angeordneten vertikalen Trennwand in Form eines leicht umgekehrten Kegelstumpfes auf. Das Bremspedal wird mittels zwei angeformter Nocken in an den Schenkeln des Rollengehäuses ausgebildeten Löcher eingepresst. Die Trennwand hat eine leichte Verdickung, welche ihre Bewegung nach unten begrenzt, wenn sie auf den Laufrädern aufliegt. Bei dieser Lenkrolle wird eine Bremswirkung dadurch erzielt, dass die Trennwand zwischen den beiden Laufrädern eindringt und sie gegen die Schenkel des Rollengehäuses drückt, wodurch die Laufräder gebremst werden. Bei einer derartigen Konstruktion kann es relativ früh zu Ermüdungserscheinungen an der Befestigung und Lagerung des Bremspedals an dem Rollengehäuse kommen, da das gabelartige Rollengehäuse wie auch das Bremspedal selbst bei der Betätigung des Bremspedals regelmäßig auseinandergedrückt werden. Zudem wirkt bei dieser Ausführungsform die Bremsvorrichtung maßgeblich im oberen Teil der Laufräder, so dass die Laufräder oben auseinandergedrückt und damit zwangsläufig unten zusammengedrückt werden. Es kommt zu einem positiven Radsturz, welcher die Auflagefläche der Laufräder und somit die Haftung am Boden reduziert. Zudem wird durch das gabelartige Rollengehäuse mit dem zusätzlich gabelartigen Bremspedal ein Austausch der Laufräder erschwert.

Bei beiden Lenkrollen des Standes der Technik umschließt das Rollengehäuse gabelartig die Laufräder und verdeckt insofern das Design der Laufräder, was unerwünscht ist.

Der Erfindung liegt die Aufgabe zugrunde, eine möglichst einfache und kostengünstig herstellbare Ausführung einer gebremsten Lenkrolle zur Verfügung zu stellen, die eine effektive und gleichzeitig verschleißarme und langlebige Bremswirkung erzielt und zudem eine möglichst einfache Austauschbarkeit der Laufräder ermöglicht.

Die Aufgabe wird erfindungsgemäß durch die Merkmale des kennzeichnenden Teils des Anspruchs 1 gelöst. Die Bremsvorrichtung weist ein Bremspedal zur Erzeugung der Bremskraft auf, welches schwenkbar an dem Rollengehäuse über eine parallel zur Radachse verlaufende, zwischen den Laufrädern angeordnete Pedalachse gelagert und in der Freilaufstellung und in der Bremsstellung über Rastmittel am Rollengehäuse kraftformschlüssig gehalten ist. Mindestens eine am Bremspedal angeordnete Bremsbacke übt in der Bremsstellung eine Bremskraft parallel zur Radachse unmittelbar auf eine Seite mindestens eines Laufrades aus. Dies ermöglicht eine sehr einfach herstellbare und gleichzeitig stabile und langlebige Bremsvorrichtung. Zudem lassen sich die Laufräder einfach austauschen, ohne dass die Bremsvorrichtung gelöst oder entfernt werden müsste. Die Laufräder werden zudem nicht vom Rollengehäuse oder der Bremsvorrichtung verdeckt, so dass eine ansprechende gestalterische Möglichkeit bzgl. des Designs der Laufräder (insbesondere der Frontfläche der Räder- Radnaben/Kappen) ermöglicht wird. Zudem ermöglicht dies eine Bremswirkung ohne eine totale Blockierung der Rollen. Für den Fall, dass die Hangabtriebskraft des Koffers in Abhängigkeit des Koffergewichts und der auf den Koffer wirkenden Kräfte größer ist als die Rückhaltekraft der Bremse, erlaubt dies ein lediglich langsames Wegrollen des Koffers bei gleichzeitiger Verhinderung eines Umkippens des Koffers.

Erfindungsgemäß ist die Pedalachse entgegen der Laufrichtung gesehen hinter einer durch die Radachse verlaufenden vertikalen Ebene angeordnet. Insbesondere sind die Bremsbacken derart angeordnet, dass ihre in Umfangsrichtung des Laufrades gesehenen Mittelpunkte entgegen der Laufrichtung L gesehen hinter einer durch die Radachse verlaufenden vertikalen Ebene liegen. Diese spezielle Anordnung der Achsen und Bremsbacken zueinander erschwert oder verhindert eine Selbstlösung des Bremspedals bei einer Drehung der Laufräder in Laufrichtung.

Zudem kann die Bremsvorrichtung in der Bremsstellung die Laufräder an der entgegen der Laufrichtung weisenden Seite auseinanderdrücken und indirekt an der in Laufrichtung weisenden Seite zusammendrücken. Dies ermöglicht eine zusätzliche Bremswirkung, da die Laufräder in Laufrichtung gegeneinandergestellt werden. Es entsteht eine Bremswirkung ähnlich wie bei der Schneeflugstellung beim Skifahren. Zudem reduziert oder verhindert eine derartige Positionierung der Bremsbacken einen positiven oder negativen Sturz der Laufräder in der Bremsstellung, was wiederum eine möglichst gerade und vollflächige Aufstandsfläche der Laufräder auf den Untergrund und damit eine möglichst hohe Bodenhaftung und eine gleichmäßig über die gesamte mögliche Aufstandsfläche /Radbreite verteilte Flächenpressung ermöglicht. Durch die vollflächige Aufstandsfläche (auch in Bremsstellung) wird die Verteilung der Gewichtaufnahme des Koffers über die gesamte mögliche Auflagefläche der Laufräder sichergestellt.

In einer bevorzugten Ausführungsform weist das Rollengehäuse und das Bremspedal zusammenwirkende Rastmittel auf, die das Bremspedal in der Bremsstellung und in der Freilaufstellung jeweils mit einer definierten Haltekraft kraftformschlüssig positionieren. Die Rastmittel erzeugen eine insbesondere haptische und/oder akustische Rückmeldung über die Betätigung des Bremspedals.

Besonders bevorzugt ist das Bremspedal als ein Zwei-Komponenten Spritzgussteil ausgebildet, wobei eine erste Komponente eine Befestigungslasche zur Befestigung des Bremspedals am Rollengehäuse bildet und eine zweite angespritzte Komponente die Bremsbacken bildet. Durch die dadurch erzielte Reduzierung der Anzahl der Einzelteile wird eine einfache Herstellung und Montage der Baugruppe ermöglicht. Besonders bevorzugt weist das Bremspedal eine Durchgangsöffnung im Bereich der Bremsbacken auf und die Bremsbacken sind zusammen als einteilige Spritzgusskomponente mit einer Materialverbindung durch die Durchgangsöffnung ausgebildet. Dies ermöglicht eine einfache Herstellung der Bremsbacken und eine besonders stabile Ausbildung. Dabei ist es von besonderem Vorteil, wenn die Bremsbacken aus einem Kunststoff ausgebildet sind, dessen Shore-Härte größer ist, insbesondere bis zu 10 größer ist, vorzugsweise 5 größer ist, als die Shore-Härte eines Kunststoffes der Laufräder. Dadurch wird der durch die Reibungskraft der Bremsbacken erzeugte Verschleiß hauptsächlich an den Seitenflächen der Laufräder erfolgen, deren wirksame Fläche erheblich größer ist als die der Bremsbacke.

Weitere vorteilhafte Ausgestaltungen der Erfindung ergeben sich aus der folgenden Figurenbeschreibung und den abhängigen Unteransprüchen.

Es zeigen:
- Fig. 1: eine dreidimensionale Ansicht einer Ausführungsform einer erfindungsgemäßen bremsbaren Lenkrolle,
- Fig. 2: eine Explosionsdarstellung der erfindungsgemäßen bremsbaren Lenkrolle gemäß Fig. 1,
- Fig. 3: eine Rückansicht der erfindungsgemäßen bremsbaren Lenkrolle gemäß Fig. 1 in Laufrichtung,
- Fig. 4: eine dreidimensionale Ansicht einer Ausführungsform eines erfindungsgemäßen Bremspedals und einer Ausführungsform von erfindungsgemäßen Bremsbacken,
- Fig. 5: eine seitliche Innenansicht der erfindungsgemäßen bremsbaren Lenkrolle gemäß Fig. 1, bei der ein Laufrad entfernt wurde, in Freilaufstellung,
- Fig. 6: eine seitliche Innenansicht der erfindungsgemäßen bremsbaren Lenkrolle gemäß Fig. 1, bei der ein Laufrad entfernt wurde, in Bremsstellung, und
- Fig. 7: eine skizzenhafte Draufsicht von oben auf eine erfindungsgemäße bremsbare Lenkrolle in Bremsstellung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

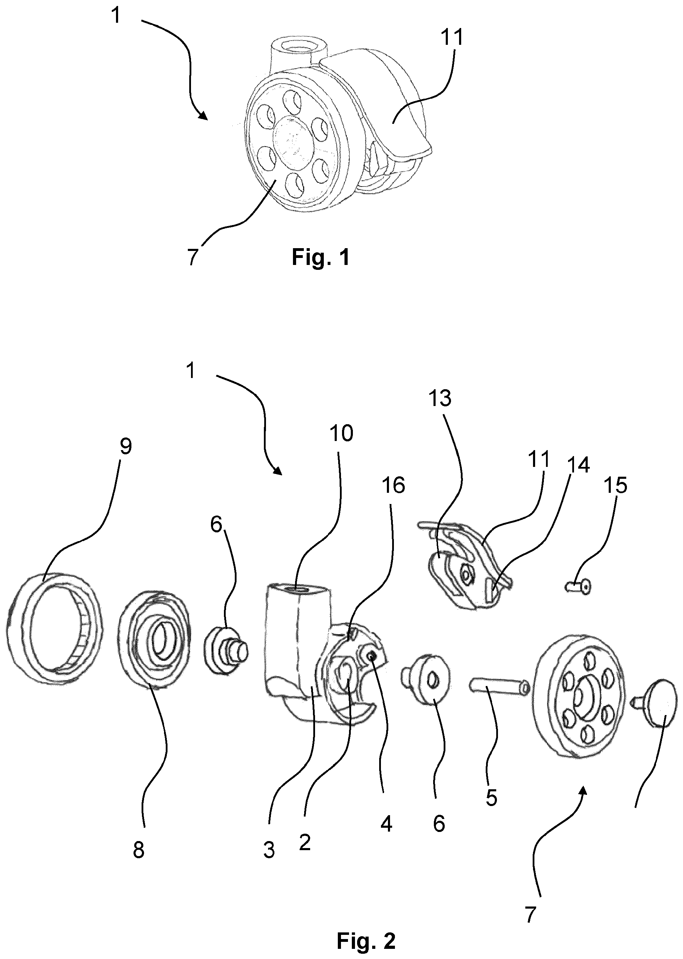

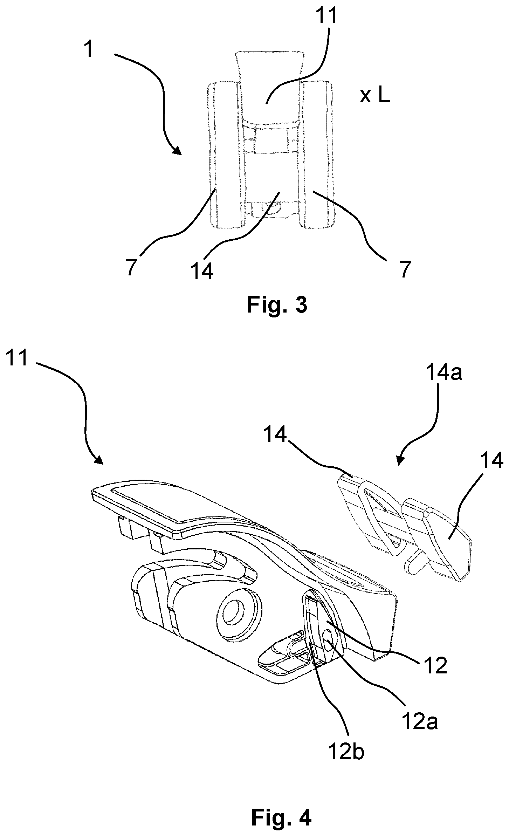

Fig. 1 zeigt eine dreidimensionale Ansicht einer beispielhaften Ausführungsform einer erfindungsgemäßen bremsbaren Lenkrolle 1. Fig. 2 zeigt dazu eine Explosionszeichnung dieser Ausführungsform, in der die Einzelteile der erfindungsgemäßen bremsbaren Lenkrolle 1 ersichtlich sind. Fig. 3 zeigt dazu eine Rückansicht in Laufrichtung L.

Die Lenkrolle 1 weist ein Rollengehäuse 3 auf. Das Rollengehäuse 3 umfasst insbesondere eine Aufnahmeöffnung 2 zur Aufnahme von mindestens einem Radlager 6. Mittels des Radlagers 6 ist eine horizontal verlaufende Radachse 5 drehbar in dem Rollengehäuse 3 gelagert. Über die Radachse 5 ist an zwei Außenseiten des Rollengehäuses 3 jeweils ein Laufrad 7 befestigt. Die Laufräder 7 können insbesondere mit der Radachse 5 über eine Niet-, Schraub- oder Rastverbindung befestigt sein.

Die Laufräder 7 weisen insbesondere eine Felge 8 und einen auf die Felge 8 aufgebrachten Laufbelag 9 auf. Der Laufbelag 9 ist vorzugsweise aus TPU-Material. Vorteilhafterweise weist das Laufrad 7 eine seitlich an der Felge 8 befestigte Radkappe auf.

Damit die Lenkrolle 1 sich bei einer Bewegung automatisch in eine Laufrichtung L ausrichtet, weist das Rollengehäuse 3 versetzt zur Radachse 5 angeordnete Schwenkmittel 10 auf. Die Schwenkmittel 10 sind entgegen der Laufrichtung L gesehen vor der Radachse 5 angeordnet. Vorzugsweise umfassen die Schwenkmittel 10 eine vertikale Aufnahmebohrung in dem Rollengehäuse 3, in der eine nicht dargestellte Schwenkachse drehbar gelagert ist und über die das Rollengehäuse 3 an einem Koffer befestigbar ist.

An dem Rollengehäuse 3 ist zudem vorzugsweise eine horizontal verlaufende Durchgangsöffnung 4 zur Befestigung einer Bremsvorrichtung ausgebildet. Die Bremsvorrichtung ist zwischen einer Bremsstellung, bei der die Bremsvorrichtung eine Bremskraft auf mindestens ein Laufrad 7 ausübt, und einer Freilaufstellung, bei der die Bremsvorrichtung die Laufräder 7 freigibt, verstellbar ausgebildet.

Erfindungsgemäß ist dafür vorgesehen, dass ein Bremspedal 11 zur Erzeugung der Bremskraft schwenkbar an dem Rollengehäuse 3 über eine parallel zur Radachse 5 verlaufende, zwischen den Laufrädern 7 angeordnete Pedalachse 15 gelagert ist. Dazu weist das Bremspedal 11 insbesondere eine gabelförmige Befestigungslasche 13 auf, die das Rollengehäuse 3 mit zwei Schenkeln zwischen den Laufrädern 7 seitlich umgreift. Die Schenkel der Befestigungslasche 13 weisen dabei insbesondere jeweils eine horizontale Durchgangsbohrung auf, die mit der Durchgangsöffnung 4 des Rollengehäuses 3 fluchtend ausgebildet sind, und durch die die Pedalachse 15 zur Befestigung des Bremspedals 11 am Rollengehäuse 3 durchgesteckt ist. Die Pedalachse 15 kann insbesondere als eine Nietverbindung ausgebildet sein.

Zudem weist das Bremspedal 11 insbesondere im radial äußeren Bereich der Lenkrolle 1 eine vorzugsweise wellenförmig geschwungene Betätigungsfläche auf, über die das Bremspedal 11 mittels einer Fußspitze von der Freilaufstellung in die Bremsstellung verstellt werden kann.

Vorteilhafterweise ist das Bremspedal 11 derart ergonomisch geformt, dass durch Krafteinwirkung auf einen unteren ersten Trittbereich das Bremspedal 11 in die Lenkrolle 1 eingefahren werden kann und durch Krafteinwirkung auf einen oberen zweiten Trittbereich das Bremspedal 11 aus der Lenkrolle 1 herausgefahren werden kann.

Vorteilhafterweise ist die Pedalachse 15 derart mittig am Bremspedal 11, insbesondere zu der Betätigungsfläche mittig, angeordnet, dass eine Betätigung des Bremspedals 11 an dem in Richtung der Schwenkmittel 10 des Rollengehäuses 3 weisenden Ende das Bremspedal 11 in die Freilaufstellung bewegt und eine Betätigung des Bremspedals 11 an dem von den Schwenkmitteln 10 des Rollengehäuses 3 abgewandten Ende das Bremspedal 11 in die Bremsstellung bewegt.

Das Bremspedal 11 weist an der einem Laufrad 7 zugewandten Seite jeweils eine Bremsbacke 14 auf, die in der Bremsstellung eine Bremskraft parallel zur Radachse 5 unmittelbar auf eine Seite des benachbarten Laufrades 7 ausübt.

Die Bremsbacken 14 sind jeweils an sich gegenüberliegenden, den Laufrädern 7 zugewandten Seitenflächen des Bremspedals 11 ausgebildet.

Das Bremspedal 11 ist vorteilhafterweise als ein Zwei-Komponenten Spritzgussteil ausgebildet, wobei eine erste Komponente einen Grundkörper mit Befestigungslasche 13 zur Befestigung am Rollengehäuse 3 und die Betätigungsfläche bildet und eine zweite Komponente die Bremsbacken 14 bildet. Vorteilhafterweise bildet der Grundkörper des Bremspedals 11 dabei einen Kernansatz 12, insbesondere aus PA Material, der vorzugsweise mit TPU-Material für die Bremsbacken 14 umspritzt wird.

Fig. 4 zeigt eine dreidimensionale Ansicht einer vorteilhaften Ausführungsform des Bremspedals 11 und der als eine Umspritzung 14a des Bremspedals 11 ausgebildeten Bremsbacken 14. Zur besseren Veranschaulichung ist die Umspritzung 14a separat dargestellt. Dabei weist das Bremspedal 11 an seinen beiden Seitenflächen jeweils den Kernansatz 12 auf. In den Kernansätzen 12 ist vorteilhafterweise eine Durchspritzöffnung 12a angeordnet, die durch das Bremspedal 11 von einer Stirnfläche eines Kernansatzes 12 bis zu der Stirnfläche des anderen Kernansatzes 12 verläuft. Vorzugsweise ist um die Kernansätze 12 herum jeweils eine Nut 12b in der Seitenfläche des Bremspedals 11 ausgebildet. Die Kernansätze 12 sind mit der Umspritzung 14a umspritzt, welche die Bremsbacken 14 bildet. Vorteilhafterweise verläuft die Umspritzung 14a durch die Durchspritzöffnung 12a und verbindet somit die beiden Bremsbacken 14. Besonders vorteilhaft greift die Umspritzung 14a in die Nut 12b ein. Eine derartige Ausgestaltung ermöglicht eine sehr stabile und langlebige Ausgestaltung der Bremsbacken 14.

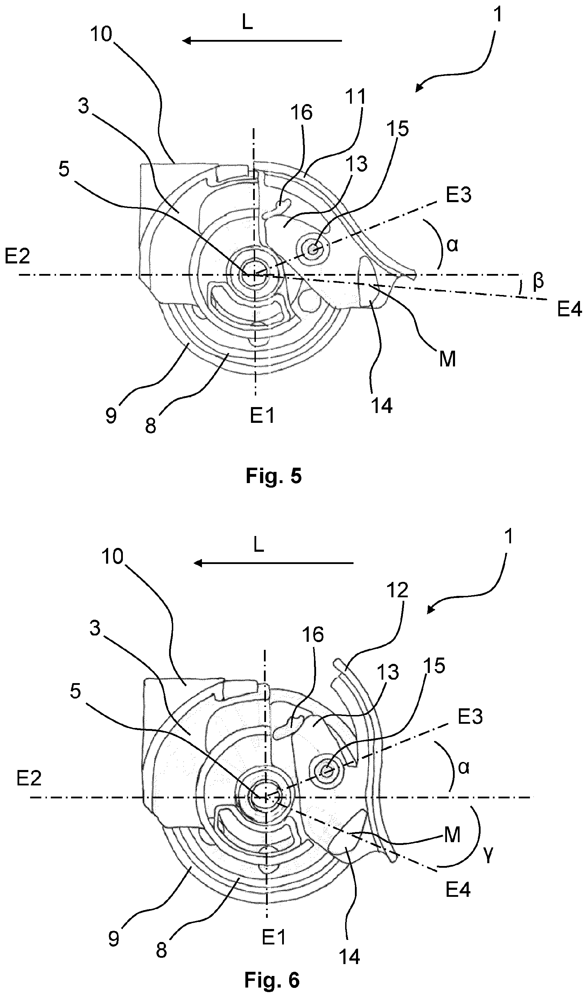

Fig. 5 zeigt eine seitliche Innenansicht der erfindungsgemäßen bremsbaren Lenkrolle 1 mit dem Bremspedal 11 in Freilaufstellung. Fig. 6 zeigt die gleiche Innenansicht der Lenkrolle 1 mit dem Bremspedal 11 in Bremsstellung. Damit man die Stellungen des Bremspedals 11 besser erkennen kann, wurde jeweils das in Sichtrichtung vordere Laufrad 7 aus der Ansicht entfernt.

Die Pedalachse 15 ist erfindungsgemäß entgegen der Laufrichtung L gesehen hinter einer durch die Radachse 5 verlaufenden vertikalen Ebene E1 angeordnet. Vorteilhafterweise ist die Pedalachse 15 oberhalb von einer durch die Radachse 5 verlaufenden horizontalen Ebene E2 angeordnet. Besonders bevorzugt ist die Pedalachse 15 derart umfangsgemäß zu den Laufrädern 7 angeordnet, dass sie in einer Ebene E3 mit der Radachse 5 liegt, die mit der horizontalen durch die Radachse 5 verlaufenden Ebene E2 einen Winkel α von maximal - 45° einschließt. In der dargestellten Ausführungsform beträgt der Winkel α = 20°.

Vorzugsweise sind die Bremsbacken 14 derart angeordnet, dass ihre in Umfangsrichtung des Laufrades 7 gesehenen Mittelpunkte M entgegen der Laufrichtung L gesehen hinter der durch die Radachse 5 verlaufenden vertikalen Ebene E1 liegen. Insbesondere liegen die Mittelpunkte M der Bremsbacken 14 in Laufrichtung L gesehen hinter der Pedalachse 15.

In der Freilaufstellung gemäß Fig. 5 sind die Bremsbacken 14 des Bremspedals 11 radial außerhalb der Laufräder 7 positioniert. Insbesondere sind die Bremsbacken 14 in der Freilaufstellung derart umfangsgemäß zu den Laufrädern 7 positioniert, dass sie in einer Ebene E4 mit der Radachse 5 liegen, die mit der horizontalen durch die Radachse 5 verlaufenden Ebene E2 einen Winkel β von maximal + 15° einschließt. In der dargestellten Ausführungsform beträgt der Winkel β = 4°.

In der Bremsstellung gemäß Fig. 6 werden die Bremsbacken 14 des Bremspedals 11 zwischen den beiden Laufrädern 7 axial verklemmt. Dazu weist das Bremspedal 11 zusammen mit den Bremsbacken 14 eine in Richtung parallel zu der Radachse 5 verlaufende Dicke auf, die größer ist als der seitliche Abstand der Laufräder 7 zueinander (siehe auch Fig. 3).

Insbesondere sind die Bremsbacken 14 in der Bremsstellung derart zwischen den Laufrädern 7 positioniert, dass ihre in Umfangsrichtung der Laufräder 7 gesehenen Mittelpunkte M unterhalb von einer durch die Radachse 5 verlaufenden horizontalen Ebene E2 liegen. Vorzugsweise sind die Bremsbacken 14 in der Bremsstellung derart zwischen den Laufrädern 7 positioniert, dass sie in einer Ebene E4 mit der Radachse 5 liegen, die mit der horizontalen durch die Radachse 5 verlaufenden Ebene E2 einen Winkel γ von maximal + 45° einschließt. In der dargestellten Ausführungsform beträgt der Winkel γ = 23 °.

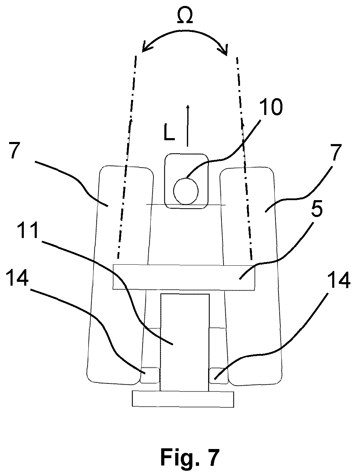

Fig. 7 zeigt eine skizzenhafte Darstellung einer Draufsicht von oben auf eine Ausführungsform der erfindungsgemäßen bremsbaren Lenkrolle in Bremsstellung. Dabei drücken die Bremsbacken 14 in der Bremsstellung die Laufräder 7 an der entgegen der Laufrichtung L weisenden Seite auseinander und indirekt an der in Laufrichtung L weisenden Seite zusammen, wobei die Laufräder 7 in Laufrichtung L mit einem Winkel Ω von 1° bis 4°, vorzugsweise 2° bis 3°, gegeneinandergestellt werden. Insbesondere wird diese Schrägstellung gegenüber der Laufrichtung L über Toleranzen in einzelnen Komponenten der Lenkrolle 1 eingestellt, vorzugsweise durch die Toleranzen des Durchmessers der Radachse 5 und des Radlagers 6 des Laufrades 7 und/oder der Ausführung der Vernietung der Radachse 5 und/oder des Übermaßes der Bremsbacken 14.

Wie in Fig. 5 und Fig. 6 ersichtlich, ist vorteilhafterweise das Bremspedal 11 in der Freilaufstellung über Rastmittel am Rollengehäuse 3 kraftformschlüssig gehalten. Insbesondere weist das Rollengehäuse 3 dazu mindestens einen angeformten Rastansatz 16 auf. Der Rastansatz 16 ist an mindestens einer einem Laufrad 7 zugewandten Seite des Rollengehäuses 3 angeordnet, vorzugsweise einteilig angeformt. Vorteilhafterweise umfasst das Rollengehäuse 3 an beiden Seiten jeweils einen Rastansatz 16. Der Rastansatz 16 ist insbesondere derart bogenförmig ausgebildet, dass er mit einer Stirnfläche eines Schenkels des Bremspedals 11 eine kraftformschlüssige Verrastung in der Freilaufstellung bildet. Vorzugsweise ist der Rastansatz 16 in Richtung der Schenkel des Bremspedals 11 gekrümmt ausgebildet.

Besonders vorteilhaft sind die Bremsbacken 14 aus einem Kunststoff, insbesondere aus TPU ausgebildet, dessen Shore-A-Härte größer ist, insbesondere bis zu 10 größer ist, vorzugsweise 5 größer ist, als die Shore-A-Härte eines Kunststoffes, insbesondere eines TPU, der Laufräder 7. Dabei wird die Shore-A-Härte nach DIN ISO 48-4:2021-02 bestimmt.

Insofern wird vorzugsweise in der Bremsstellung eine Klemmung zwischen dem aus TPU bestehenden Bremspedal 11 und den aus TPU bestehenden Radreifen der Laufräder 7 erzeugt. Vorteilhafterweise sind die Bremsbacken 14 glatt, d.h. ohne Profilierung ausgebildet, wodurch eine hohe Flächenpressung erzeugt wird. Gleichzeitig wird ein Verkanten der Bremsbacken 14 mit dem Material der Radreifen erschwert. Idealerweise sind die TPU-Materialien bezogen auf die Reibwerte derart ausgewählt, dass ein Durchrutschen der Räder ab einem bestimmten Grenzwert der auf das Gepäckstück wirkenden Bewegungskraft möglich ist, ohne dass sich das Bremspedal 11 aus der Bremsstellung löst. Dies kann insbesondere ein Umkippen des Gepäckstücks bei hohen Bewegungskräften, insbesondere durch Schrägflächen über 38°, verhindern.

Vorteilhafterweise bestehen insbesondere die Kernansätze 12 der Bremsbacken 14 aus relativ zu den Bremsbacken 14 härteren PA-Vollmaterial, wodurch eine Federwirkung und dadurch möglicherweise verursachte Ermüdungserscheinungen im Material der Bremsbacken 14 reduziert oder sogar vermieden werden.

### Bezugszeichenliste

- 1: Lenkrolle
- 2: Aufnahmeöffnung
- 3: Rollengehäuse
- 4: Durchgangsöffnung
- 5: Radachse
- 6: Radlager
- 7: Laufrad
- 8: Felge
- 9: Laufbelag
- 10: Schwenkmittel
- 11: Bremspedal
- 12: Kernansätze
- 12a: Durchspritzöffnung
- 12b: Nut
- 13: Befestigungslasche
- 14: Bremsbacken
- 14a: Umspritzung
- 15: Pedalachse
- 16: Rastansatz am Rollengehäuse

- E1: Vertikale Ebene
- E2: Horizontale Ebene
- E3: Ebene Pedalachse
- E4: Ebene Bremsbacke
- L: Laufrichtung
- M: Mittelpunkt

## Patentansprüche

1. Bremsbare Lenkrolle (1) für Koffer, aufweisend ein über Schwenkmittel (10) in eine Laufrichtung (L) schwenkbares Rollengehäuse (3) und zwei an dem Rollengehäuse (3) auf einer horizontalen Radachse (5) drehbar gelagerte Laufräder (7), wobei die Schwenkmittel entgegen der Laufrichtung (L) gesehen vor der Radachse (5) angeordnet sind, und aufweisend eine Bremsvorrichtung, die zwischen einer Bremsstellung, bei der die Bremsvorrichtung eine Bremskraft auf mindestens ein Laufrad (7) ausübt, und einer Freilaufstellung, bei der die Bremsvorrichtung die Laufräder (7) freigibt, verstellbar ausgebildet ist,
**dadurch gekennzeichnet, dass**
ein Bremspedal (11) zur Erzeugung der Bremskraft schwenkbar an dem Rollengehäuse (3) über eine parallel zur Radachse (5) verlaufende, zwischen den Laufrädern (7) angeordnete Pedalachse (15) gelagert und in der Freilaufstellung und in der Bremsstellung über Rastmittel (16) am Rollengehäuse (3) kraftformschlüssig gehalten ist, wobei die Pedalachse (15) entgegen der Laufrichtung (L) gesehen hinter einer durch die Radachse (5) verlaufenden vertikalen Ebene (E1) angeordnet ist, und Bremsbacken (14) jeweils an sich gegenüberliegenden, den Laufrädern (7) zugewandten Seitenflächen des Bremspedals (11) ausgebildet sind, wobei mindestens eine am Bremspedal (11) angeordnete Bremsbacke (14) in der Bremsstellung eine Bremskraft parallel zur Radachse (5) unmittelbar auf eine Seite mindestens eines Laufrades (7) ausübt.

2. Bremsbare Lenkrolle nach Anspruch 1,
**dadurch gekennzeichnet, dass**
die Pedalachse (15) oberhalb von einer durch die Radachse (5) verlaufenden horizontalen Ebene (E2) angeordnet ist.

3. Bremsbare Lenkrolle nach einem der vorherigen Ansprüche,
**dadurch gekennzeichnet, dass**
die Pedalachse (15) derart umfangsgemäß zu den Laufrädern (7) angeordnet ist, dass sie in einer Ebene (E3) mit der Radachse (5) liegt, die mit einer horizontalen, durch die Radachse (5) verlaufenden Ebene (E2) einen Winkel (α) von maximal - 45° einschließt.

4. Bremsbare Lenkrolle nach einem der vorherigen Ansprüche,
**dadurch gekennzeichnet, dass**
die Bremsbacken (14) derart angeordnet sind, dass ihre in Umfangsrichtung des Laufrades (7) gesehenen Mittelpunkte (M) entgegen der Laufrichtung (L) gesehen hinter einer durch die Radachse (5) verlaufenden vertikalen Ebene (E1) liegen.

5. Bremsbare Lenkrolle nach einem der vorherigen Ansprüche,
**dadurch gekennzeichnet, dass**
die Bremsvorrichtung in der Bremsstellung die Laufräder (7) an der entgegen der Laufrichtung (L) weisenden Seite auseinanderdrücken und indirekt an der in Laufrichtung (L) weisenden Seite zusammendrücken, wobei die Laufräder (7) in Laufrichtung (L) mit einem Winkel von 1° bis 4°, vorzugsweise 2° bis 3°, gegeneinandergestellt werden.

6. Bremsbare Lenkrolle nach einem der vorherigen Ansprüche,
**dadurch gekennzeichnet, dass**
die Bremsbacken (14) in der Freilaufstellung derart umfangsgemäß zu den Laufrädern (7) positioniert sind, dass sie in einer Ebene (E4) mit der Radachse (5) liegen, die mit einer horizontalen, durch die Radachse (5) verlaufenden Ebene (E2) einen Winkel (β) von maximal + 15° einschließt.

7. Bremsbare Lenkrolle nach einem der vorherigen Ansprüche,
**dadurch gekennzeichnet, dass**
die Bremsbacken (14) in der Bremsstellung derart zwischen den Laufrädern (7) positioniert sind, dass ihre in Umfangsrichtung der Laufräder (7) gesehenen Mittelpunkte (M) in der Bremsstellung unterhalb von einer durch die Radachse (5) verlaufenden horizontalen Ebene (E2) liegen.

8. Bremsbare Lenkrolle nach einem der vorherigen Ansprüche,
**dadurch gekennzeichnet, dass**
die Bremsbacken (14) in der Bremsstellung derart zwischen den Laufrädern (7) positioniert sind, dass sie in einer Ebene (E4) mit der Radachse (5) liegen, die mit einer horizontalen, durch die Radachse (5) verlaufenden Ebene (E2) einen Winkel (β) von maximal + 45° einschließt.

9. Bremsbare Lenkrolle nach einem der vorherigen Ansprüche,
**dadurch gekennzeichnet, dass**
die Pedalachse (15) derart mittig am Bremspedal (11) angeordnet ist, dass eine Betätigung des Bremspedals (11) an dem in Richtung der Schwenkmittel (10) weisenden Ende das Bremspedal (11) in die Freilaufstellung bewegt und eine Betätigung des Bremspedals an dem von den Schwenkmitteln (10) abgewandten Ende das Bremspedal (11) in die Bremsstellung bewegt.

10. Bremsbare Lenkrolle nach einem der vorherigen Ansprüche,
**dadurch gekennzeichnet, dass**
das Bremspedal (11) als ein Zwei-Komponenten Spritzgussteil ausgebildet ist, wobei eine erste Komponente eine Befestigungslasche (13) zur Befestigung am Rollengehäuse (3) bildet und eine zweite Komponente die Bremsbacken (14) bildet.

11. Bremsbare Lenkrolle nach einem der vorherigen Ansprüche,
**dadurch gekennzeichnet, dass**
die Bremsbacken (14) aus einem Kunststoff ausgebildet sind, dessen Shore-A-Härte größer ist, insbesondere bis zu 10 größer ist, vorzugsweise 5 größer ist, als die Shore-A-Härte eines Kunststoffes der Laufräder (7).

12. Bremsbare Lenkrolle nach einem der vorherigen Ansprüche,
**dadurch gekennzeichnet, dass**
das Bremspedal (11) zusammen mit den Bremsbacken (14) eine in Richtung parallel zu der Radachse (5) verlaufende Dicke aufweisen, die größer ist als ein seitlicher Abstand der Laufräder (7) zueinander.

13. Bremsbare Lenkrolle nach einem der vorherigen Ansprüche,
**dadurch gekennzeichnet, dass**
das Bremspedal (11) eine Durchgangsöffnung (4) im Bereich der Bremsbacken (14) aufweist und die Bremsbacken (14) zusammen als einteilige Spritzgusskomponente mit einer Materialverbindung durch die Durchgangsöffnung (4) ausgebildet sind.

## Claims

1. Brakeable swivel castor (1) for cases, having a castor housing (3) which can be pivoted into a rolling direction (L) via pivot means (10) and two wheels (7) rotatably mounted on the castor housing (3) on a horizontal wheel axle (5), wherein the pivot means are arranged in front of the wheel axle (5), as seen contrary to the rolling direction (L), and having a braking device, which is designed to be adjustable between a braking position, in which the braking device exerts a braking force on at least one wheel (7), and a free-rolling position, in which the braking device releases the wheels (7),
**characterized in that**
a brake pedal (11) for generating the braking force is pivotably mounted on the castor housing (3) via a pedal axle (15), which extends parallel to the wheel axle (5) and is arranged between the wheels (7), and, in the free-rolling position and in the braking position, is held on the castor housing (3) with form fit and force fit via latching means (16), wherein the pedal axle (15) is arranged behind a vertical plane (E1) extending through the wheel axle (5), as seen contrary to the rolling direction (L) and brake shoes (14) are each formed on opposite lateral surfaces of the brake pedal (11), which face the wheels (7), wherein, in the braking position, at least one brake shoe (14) arranged on the brake pedal (11) exerts a braking force parallel to the wheel axle (5) directly on one side of at least one wheel (7).

2. Brakeable swivel castor according to Claim 1,
**characterized in that**
the pedal axle (15) is arranged above a horizontal plane (E2) extending through the wheel axle (5).

3. Brakeable swivel castor according to one of the preceding claims,
**characterized in that**
the pedal axle (15) is arranged circumferentially with respect to the wheels (7) in such a way that it is located in a plane (E3) with the wheel axle (5), which plane encloses an angle (α) of a maximum of - 45° with a horizontal plane (E2) extending through the wheel axle (5).

4. Brakeable swivel castor according to one of the preceding claims,
**characterized in that**
the brake shoes (14) are arranged in such a way that their centre points (M), as seen in the circumferential direction of the wheel (7), are located behind a vertical plane (E1) extending through the wheel axle (5), as seen contrary to the rolling direction (L).

5. Brakeable swivel castor according to one of the preceding claims,
**characterized in that**
in the braking position, the braking device presses the wheels (7) apart on the side facing contrary to the rolling direction (L) and presses them indirectly together on the side facing in the rolling direction (L), wherein the wheels (7) are positioned towards one another in the rolling direction (L) at an angle of 1° bis 4°, preferably 2° to 3°.

6. Brakeable swivel castor according to one of the preceding claims,
**characterized in that**
in the free-rolling position, the brake shoes (14) are positioned circumferentially with respect to the wheels (7) in such a way that they are located in a plane (E4) with the wheel axle (5), which plane encloses an angle (β) of a maximum of + 15° with a horizontal plane (E2) extending through the wheel axle (5).

7. Brakeable swivel castor according to one of the preceding claims,
**characterized in that**
in the braking position, the brake shoes (14) are positioned between the wheels (7) in such a way that, in the braking position, their centre points (M), as seen in the circumferential direction of the wheels (7), are located below a horizontal plane (E2) extending through the wheel axle (5).

8. Brakeable swivel castor according to one of the preceding claims,
**characterized in that**
in the braking position, the brake shoes (14) are positioned between the wheels (7) in such a way that they are located in a plane (E4) with the wheel axle (5), which plane encloses an angle (β) of a maximum of + 45° with a horizontal plane (E2) extending through the wheel axle (5).

9. Brakeable swivel castor according to one of the preceding claims,
**characterized in that**
the pedal axle (15) is arranged centrally on the brake pedal (11) in such a way that an actuation of the brake pedal (11) at the end facing in the direction of the pivot means (10) moves the brake pedal (11) into the free-rolling position and an actuation of the brake pedal at the end facing away from the pivot means (10) moves the brake pedal (11) into the braking position.

10. Brakeable swivel castor according to one of the preceding claims,
**characterized in that**
the brake pedal (11) is designed as a two-component injection moulded part, wherein a first component forms a fastening attachment (13) for fastening on the castor housing (3) and a second component forms the brake shoes (14).

11. Brakeable swivel castor according to one of the preceding claims,
**characterized in that**
the brake shoes (14) are made of a plastic material whereof the Shore A hardness is greater, in particular up to 10 greater, preferably 5 greater, than the Shore A hardness of a plastic material of the wheels (7).

12. Brakeable swivel castor according to one of the preceding claims,
**characterized in that**
the brake pedal (11), together with the brake shoes (14), have a thickness extending in the direction parallel to the wheel axle (5) which is greater than a lateral distance between the wheels (7).

13. Brakeable swivel castor according to one of the preceding claims,
**characterized in that**
the brake pedal (11) has a through-opening (4) in the region of the brake shoes (14) and the brake shoes (14) are formed together as a single-part injection moulded component with a material connection through the through-opening (4).

## Revendications

1. Roulette pivotante freinable (1) pour valises, comprenant un boîtier de roulette (3) pivotant dans une direction de déplacement (L) grâce à des moyens de pivotement (10) et deux roues (7) montées de manière rotative sur le boîtier de roulette (3) sur un axe de roue horizontal (5), les moyens de pivotement étant disposés devant l'axe de roue (5) vu dans le sens contraire au sens de déplacement (L), et comportant un dispositif de freinage qui est réglable entre une position de freinage, dans laquelle le dispositif de freinage exerce une force de freinage sur au moins une roue (7), et une position de roue libre, dans laquelle le dispositif de freinage libère les roues (7),
**caractérisé en ce que**
une pédale de frein (11) destinée à générer la force de freinage est montée de manière pivotante sur le boîtier de rouleau (3) via un axe de pédale (15) s'étendant parallèlement à l'axe de roue (5) et disposé entre les roues (7) et est maintenue dans la position de roue libre et dans la position de freinage par des moyens d'encliquetage (16) sur le boîtier de rouleau (3) par adhérence, l'axe de pédale (15) étant disposé, vu dans le sens contraire au sens de marche (L), derrière un plan vertical (E1) s'étendant à travers l'axe de roue (5), et des mâchoires de frein (14) sont formées respectivement sur des surfaces latérales opposées de la pédale de frein (11) tournées vers les roues (7), au moins une mâchoire de frein (14) disposée sur la pédale de frein (11) exerçant, en position de freinage, une force de freinage parallèlement à l'axe de roue (5) directement sur un côté d'au moins une roue (7).

2. Roulette pivotante freinable selon la revendication 1,
**caractérisée en ce que**
l'axe de pédale (15) est disposé au-dessus d'un plan horizontal (E2) passant par l'axe de roue (5).

3. Roulette pivotante freinable selon l'une des revendications précédentes,
**caractérisée en ce que**
l'axe de pédale (15) est disposé circonférentiellement par rapport aux roues (7) de telle sorte qu'il se trouve dans un plan (E3) avec l'axe de roue (5), qui forme un angle (α) maximal de - 45° avec un plan horizontal (E2) passant par l'axe de roue (5).

4. Roulette pivotante freinable selon l'une des revendications précédentes,
**caractérisée en ce que**
les mâchoires de frein (14) sont disposées de telle sorte que leurs centres (M), vus dans le sens circonférentiel de la roue (7), se trouvent derrière un plan vertical (E1) passant par l'axe de roue (5), vu dans le sens opposé au sens de roulement (L).

5. Roulette pivotante freinable selon l'une des revendications précédentes,
**caractérisée en ce que**
le dispositif de freinage, en position de freinage, écarte les roues (7) du côté opposé au sens de marche (L) et les serre indirectement du côté du sens de marche (L), les roues (7) sont opposées l'une à l'autre dans le sens de marche (L) avec un angle de 1° à 4°, de préférence de 2° à 3°.

6. Roulette pivotante freinable selon l'une des revendications précédentes,
**caractérisée en ce que**
les mâchoires de frein (14) sont positionnées dans la position de roue libre de telle manière par rapport aux roues (7) qu'elles se trouvent dans un plan (E4) avec l'axe de roue (5) qui forme un angle (β) maximal de + 15° avec un plan horizontal (E2) passant par l'axe de roue (5).

7. Roulette pivotante freinable selon l'une des revendications précédentes,
**caractérisée en ce que**
les mâchoires de frein (14) sont positionnées entre les roues (7) en position de freinage de telle sorte que leurs centres (M), vus dans le sens circonférentiel des roues (7), se trouvent en position de freinage en dessous d'un plan horizontal (E2) passant par l'axe de roue (5).

8. Roulette pivotante freinable selon l'une des revendications précédentes,
**caractérisée en ce que**
les mâchoires de frein (14) sont positionnées entre les roues (7) en position de freinage de telle sorte qu'elles se trouvent dans un plan (E4) avec l'axe de roue (5) qui forme un angle (β) maximal de + 45° avec un plan horizontal (E2) passant par l'axe de roue (5).

9. Roulette pivotante freinable selon l'une des revendications précédentes,
**caractérisée en ce que**
l'axe de pédale (15) est disposé de manière centrée sur la pédale de frein (11) de telle sorte qu'un actionnement de la pédale de frein (11) à l'extrémité tournée vers le moyen de pivotement (10) déplace la pédale de frein (11) en position de roue libre et qu'un actionnement de la pédale de frein à l'extrémité opposée au moyen de pivotement (10) déplace la pédale de frein (11) en position de freinage.

10. Roulette pivotante freinable selon l'une des revendications précédentes,
**caractérisée en ce que**
la pédale de frein (11) est réalisée sous la forme d'une pièce moulée par injection à deux composants, un premier composant formant une patte de fixation (13) pour la fixation au boîtier de roulette (3) et un deuxième composant formant les mâchoires de frein (14).

11. Roulette pivotante freinable selon l'une des revendications précédentes,
**caractérisée en ce que**
les mâchoires de frein (14) sont réalisées en une matière plastique dont la dureté Shore A est supérieure, en particulier jusqu'à 10 fois supérieure, de préférence 5 fois supérieure, à la dureté Shore A d'une matière plastique des roues (7).

12. Roulette pivotante freinable selon l'une des revendications précédentes,
**caractérisée en ce que**
la pédale de frein (11) et les mâchoires de frein (14) présentent ensemble une épaisseur parallèle à l'axe de roue (5) qui est supérieure à la distance latérale entre les roues (7).

13. Roulette pivotante freinable selon l'une des revendications précédentes,
**caractérisée en ce que**
la pédale de frein (11) présente une ouverture de passage (4) dans la zone des mâchoires de frein (14) et les mâchoires de frein (14) sont réalisées ensemble sous la forme d'un composant moulé par injection d'une seule pièce avec une liaison de matière à travers l'ouverture de passage (4).
